# EUROPEAN PATENT SPECIFICATION

(11) **EP 2 823 664 B1**
(45) Date of publication and mention of the grant of the patent: **16.01.2019**
(21) Application number: 13708249.1
(22) Date of filing: 12.02.2013
(51) Int. Cl.: H04W 24/10

(54) **A NODE AND METHOD FOR HANDLING NON-REAL TIME DATA IN A WIRELESS COMMUNICATIONS NETWORK**
KNOTEN UND VERFAHREN ZUR HANDHABUNG VON NICHT-ECHTZEIT DATEN IN EINEM DRAHTLOSEN KOMMUNIKATIONSNETZ
NOEUD ET PROCÉDÉ DE TRAITEMENT DE DONNÉES TEMPS NON RÉEL DANS UN RÉSEAU DE TÉLÉCOMMUNICATION SANS FIL

(30) Priority: 07.03.2012 US 201261607762 P
(43) Date of publication of application: 14.01.2015
(73) Proprietor: Telefonaktiebolaget LM Ericsson (publ), 164 83 Stockholm (SE)
(72) Inventor: SIOMINA, Iana, S-170 66 Solna (SE)
(74) Representative: Brann AB
(86) International application number: PCT/SE2013/050118
(87) International publication number: WO 2013/133749

(56) References cited:
- EP-A1- 2 117 135
- WO-A1-2011/101346
- ERICSSON: "Triggers for logged MDT measurement reporting R2-101426", 22 February 2010 (2010-02-22), 3GPP TSG RAN WG2 MEETING 69 SAN FRANCISCO, USA,, PAGE(S) 1 - 3, XP002629991, the whole document
- NEC: "Logged MDT measurement reporting", 6 April 2010 (2010-04-06), 3GPP DRAFT; R2-102230, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050422604, [retrieved on 2010-04-06] the whole document
- MOTOROLA: "Triggering of Reporting of MDT Measurements", 18 January 2010 (2010-01-18), 3GPP TSG RAN WG2 MEETING 68-BIS, VALENCIA, SPAIN, PAGE(S) 1 - 3, XP002633874, the whole document

## Description

### TECHNICAL FIELD

Examples presented herein are directed towards a radio node, and corresponding methods therein, for collecting and/or handling non-real time measurements and/or non-real time data in a wireless communications network.

### BACKGROUND

In a typical cellular system, also referred to as a wireless communications network, wireless terminals, also known as mobile stations and/or user equipment units communicate via a Radio Access Network (RAN) to one or more core networks. The wireless terminals can be mobile stations or user equipment units such as mobile telephones also known as "cellular" telephones, and laptops with wireless capability, e.g., mobile termination, and thus may be, for example, portable, pocket, hand-held, computer-comprised, or car-mounted mobile devices which communicate voice and/or data with radio access network.

The radio access network covers a geographical area which is divided into cell areas, with each cell area being served by a base station, e.g., a Radio Base Station (RBS), which in some networks is also called "NodeB" or "B node" and which in this document also is referred to as a base station. A cell is a geographical area where radio coverage is provided by the radio base station equipment at a base station site. Each cell is identified by an identity within the local radio area, which is broadcast in the cell. The base stations communicate over the air interface operating on radio frequencies with the user equipment units within range of the base stations.

In some versions of the radio access network, several base stations are typically connected, e.g., by landlines or microwave, to a Radio Network Controller (RNC). The radio network controller, also sometimes termed a Base Station Controller (BSC), supervises and coordinates various activities of the plural base stations connected thereto. The radio network controllers are typically connected to one or more core networks.

The Universal Mobile Telecommunications System (UMTS) is a third generation mobile communication system, which evolved from the Global System for Mobile Communications (GSM), and is intended to provide improved mobile communication services based on Wideband Code Division Multiple Access (WCDMA) access technology. UMTS Terrestrial Radio Access Network (UTRAN) is essentially a radio access network using wideband code division multiple access for user equipment units (UEs). The Third Generation Partnership Project (3GPP) has undertaken to evolve further the UTRAN and GSM based radio access network technologies. Long Term Evolution (LTE) together with Evolved Packet Core (EPC) is the newest addition to the 3GPP family.

Non-real time measurements and background services are becoming more and more common in wireless communication networks. More and more information is being exchanged between network and users for various purposes, e.g., file sharing, measurements reporting for Minimizing Drive Tests (MDT), etc. A need exists to improve the handling of such non-real time measurements.

WO2011101346 (A1) relates to providing of measurement reports to a wireless communication network from a mobile station. A first network node (NN) of the network sends (73) a request for a logged measurement report, which is received by the first mobile station (MS). The first mobile station then sends (86) a logged measurement report as a response to the, which report is then received by the first network node.

3GPP draft R2-101426 discusses triggers for logged MDT measurement reporting. The UE indicates the availability of logged measurements to a network node. The UE may trigger the indication based on many triggers. After the network node has received the indication and selected a suitable occasion to request the logged measurements from the UE, it will request the UE to transmit the measurement log.

### SUMMARY

The invention is defined by the appended claims.

Deploying radio nodes that provide a specific service or a restricted set of services becomes more justified in wireless network architectures. The current 3GPP standard provides limited possibilities for using such specialized service nodes, and in particular the nodes facilitating the non-real time information collection throughout the network.

The examples presented herein relate to wireless communication networks and in particular to the networks exercising long-time collecting and storing of measurements or network performance statistics by wireless devices. Examples presented herein are also directed towards reporting such measurements or performance statistics to the network. One example of such measurements may be MDT measurements. Another example application is collecting measurements in difficult-to-access areas or natural disaster areas.

Thus, at least one example object of some of the examples presented herein is to reduce the use of unnecessary system resources, in particular, related to non-real time measurements and network statistics. An example advantage of utilizing the examples may be an increase in a network node and a user equipment's awareness of the measurement collection capability of radio nodes. A further example advantage may be providing a proximity-based initiation of the MDT measurements collection in shared-cell networks. Yet another example advantage may be reduced signaling overhead in the network and avoiding unnecessary signaling consuming user equipment power (e.g., sending a user equipment indication to a node not currently available for collecting measurements and/or data). Another example advantage may be enabling handover to collector nodes, based on determined proximity and/or availability, for the purpose of reporting collected measurements or statistics and preventing unnecessary handover for the same purpose.

Accordingly, some of the examples may be directed towards a method, in a first radio node, for collecting non-real time measurements and/or non-real time data. The first radio node is in a wireless communications network. The method comprises transmitting, to at least one second radio node, a signal or a message indicating an ability for collecting the non-real time measurements and/or non-real time data. The method further comprises receiving, from the at least one second radio node, the non-real time measurements and/or non-real time data in response to the signal or message indicating the ability.

Some of the examples may be directed towards a first radio node for collecting non-real time measurements and/or non-real time data. The first radio node is in a wireless communications network. The first radio node comprises radio circuitry configured to send, to at least one second radio node, a signal or a message indicating an ability for collecting said non-real time measurements and/or non-real time data. The radio circuitry is further configured to receive, from the at least one second radio node, the non-real time measurements and/or non-real time data in response to the signal or message indicating the ability.

Some of the examples may be directed towards a method, in a second radio node, for handling of non-real time measurements and/or non-real time data. The second radio node is in a wireless communications network. The method comprises receiving, from a first radio node, a signal or message indicating an ability of the first radio node to collect said non-real time measurements and/or non-real time data. The method further comprises transmitting, to the first radio node, non-real time measurements and/or data in response to the received signal or message.

Some of the examples may be directed towards a second radio node for handling of non-real time measurements and/or non-real time data. The radio node is in a wireless communications network. The second radio node comprises radio circuitry configured to receive, from a first radio node, a signal or message indicating an ability of the first radio node to collect said non-real time measurements and/or non-real time data. The radio circuitry is further configured to send, to the first radio node, non-real time measurements and/or data in response to the received signal or message.

### DEFINITIONS

- 3GPP: 3rd Generation Partnership Project
- AECID: Adaptive Enhanced Cell ID
- BS: Base Station
- BSC: Base Station Controller
- CGI: Cell Global Identity
- CRS: Cell-specific Reference Signal
- eNodeB: evolved Node B
- DCCH: Dedicated Control Channel
- DL: Downlink
- EM: Element Manager
- EPC: Evolved Packet Core
- E-SMLC: Evolved SMLC
- EUTRA: Evolved Universal Terrestrial Radio Access
- GERAN: GSM EDGE Radio Access Network
- GSM: Global System for Mobile Communications
- ID: Identification
- IMEI: International Mobile Equipment Identity
- IMSI: International Mobile Subscriber Identity
- LA: Local Area
- LTE: Long-Term Evolution
- MDT: Minimization of Drive Tests
- MIB: Master Information Block
- O&M: Operation and Maintenance
- P-CCPCH: Primary Common Control Physical Channel
- PCI: Physical Cell Identity
- PLMN: Public Land Mobile Network
- PSS: Primary Synchronization Signal
- QoS: Quality of Service
- RA: Routing Area
- RAN: Radio Access Network
- RAT: Radio Access Type
- RBS: Radio Base Station
- RF: Radio Frequency
- RNC: Radio Network Controller
- RRC: Radio Resource Control
- RSCP: Received Signal Code Power
- RSRP: Reference Signal Received Power
- RSRQ: Reference Signal Received Quality
- RSSI: Received Signal Strength Indicator
- RRM: Radio Resource Management
- RTT: Round Trip Time
- SIB: System Information Block
- SINR: Signal-to-Interference Ratio
- SON: Self-Optimized Network
- SSS: Secondary Synchronization Signal
- TA: Tracking Area
- TCE: Trace Collection Entity
- TDD: Time-Division Duplexing
- UE: User Equipment
- UL: Uplink
- UMTS: Universal Mobile Telecommunications System
- UTRAN: UMTS Terrestrial Radio Access Network

### BRIEF DESCRIPTION OF THE DRAWINGS

The foregoing will be apparent from the following more particular description of the examples, as illustrated in the accompanying drawings in which like reference characters refer to the same parts throughout the different views. The drawings are not necessarily to scale, emphasis instead being placed upon illustrating the example embodiments.
FIGS. 1 and 2 are messaging diagrams for the collection of non-real time measurements and/or data;
FIG. 3 is an illustrative example of cell sharing or cell creating performed by the collector node, according to some of the examples;
FIG. 4 is an example node configuration of a collector node, according to some of the examples;
FIG. 5 is an example node configuration of a user equipment (e.g., measuring node), according to some of the examples;
FIG. 6 is a general messaging diagram of a first radio node (which comprises collector node functionality) and a second radio node (which comprises measuring node functionality), according to some of the examples;
FIG. 7 is a flow diagram of example operations of the collector node of FIGS. 4 and 6, according to some of the examples; and
FIG. 8 is a flow diagram of example operations of the user equipment of FIGS. 5 and 6, according to some of the examples.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments. The terminology used herein is for the purpose of describing the example embodiments and is not intended to limit the embodiments presented herein.

### Overview of non-real time measurement collection

In order to provide a better explanation of the example embodiments presented herein, a problem will first be identified and discussed. Non-real time measurements and background services are becoming more and more common in wireless communication networks. One example application of collecting non-real time measurements is minimizing drive tests (MDT) and enhanced MDT which is being standardized for UMTS and LTE.

MDT is used as a means to compensate or partially replace the costly drive tests an operator would otherwise have to perform by configuring a selection of user equipments in an active or idle mode to perform certain types of measurements, as described in 3GPP TR 36.805, 37.320. The selection may be made based on an International Mobile Subscriber Identity (IMSI), International Mobile Equipment Identity (IMEI), area, device capabilities and any combinations thereof.

The following use cases for MDT have been identified: coverage optimization, mobility optimization, capacity optimization, parameterization for common channels, and Quality of Service (QoS) verification. Two modes of MDT exist, immediate MDT and logged MDT. The immediate MDT mode is the MDT functionality involving measurement performance by the user equipment in the CONNECTED state. Measurements obtained in the immediate MDT mode are reported to an available eNodeB/RNC at the time of reporting. The logged MDT mode is the MDT functionality involving measurement performance by a user equipment in the IDLE state at points when configured conditions are satisfied. Measurements obtained in the logged MDT are stored in a measurement log for reporting to eNodeB/RNC at a later point in time.

One of the requirements of 3GPP TR 36.805 for MDT is that the measurements in measurement logs and the reported measurements for immediate MDT shall be linked to available location information and/or other information or measurements that may be used to derive location information. It should be appreciated that according to 3GPP TR 36.805, only RSRP measurements have been decided to be utilized for this purpose thus far. The measurements in the measurement logs shall also be linked to a time stamp that is available in the user equipment.

According to 3GPP TR 36.805, the following measurements logs have been considered thus far: periodical downlink pilot measurements, when parameters associated with a serving cell become worse than threshold, when a transmit power headroom becomes less than threshold, during a random access failure, during a paging channel failure, during a broadcast channel failure, or during a radio link failure report.

It should be appreciated that all of the listed above measurement logs include at least the following: location info when available (e.g., location at which the concerned trigger and/or measurement took place), time information (e.g., a time at which the concerned trigger and/or measurement took place), cell identification (e.g., at least the serving cell is included), and radio environment measurement (e.g., cell measurements that are available at the trigger and/or average cell measurements during a certain period before/after the trigger, where the cell measurements include RSRP and RSRQ measurements).

MDT measurements, including the associated location information, may be provided via RRC signaling. Available MDT measurements performed for intra-frequency/inter-frequency/inter-RAT may be reported. The currently discussed set of neighbor cell measurements and the associated information that can be reported for MDT comprises: RSRP and RSRQ for EUTRA, RSCP and Ec/No for UTRA, Rxlev for GERAN, carrier frequency (e.g., for inter-frequency/inter-RAT) and physical cell identity of the logged cell.

With respect to logged MDT measurements, the network initiates the procedure with the user equipment in a RRC Connected mode by sending a *LoggedMeasurementConfiguration* message. The message is used to transfer configuration parameters for Logged MDT. A release operation for a logged measurement configuration in the user equipment is realized only by configuration replacement when the configuration is overwritten or by configuration clearance in case a duration timer stopping or expiration condition is met. Below an example of a *LoggedMeasurementConfiguration* message is provided.

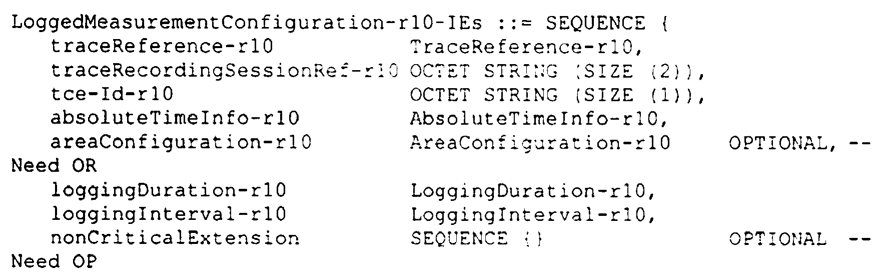

The *LoggedMeasurementConfiguration* message is sent in a DL-DCCH-Message class which is the set of RRC messages that may be sent from the E UTRAN to the user equipment or from the E-UTRAN to the relay node on the downlink DCCH logical channel.

'LoggingDuration' is a pre-defined value in the range of 10 min-120 min. 'Logginglnterval' is a pre-defined value in the range of 1.28s-2.56s. 'tce-Id' denotes a trace collection entity (TCE) ID which is sent to the user equipment. The user equipment returns the TCE ID to the network together with the logged data. The network has a configured mapping of the IP address of the TCE, to which the Trace records shall be transferred, and the TCE ID. The mapping needs to be unique within the PLMN.

If areaConfiguration is configured, the user equipment will log measurements as long as it is within the configured logging area. The scope of the logging area may comprise a list of 32 global cell identities. If the listing of global cell identifies is configured, the user equipment will only log measurements when camping in any of these cells. The logging area may also comprise a list of 8 Tracking Areas (TAs), 8 Local Areas (LAs) or 8 RAs. If the TA, LA or RA list is configured, the user equipment will only log measurements when camping in any cell belonging to the preconfigured TA/LA/RAs. If no area scope is configured, the configuration is valid in the entire MDT PLMN of the user equipment. For example, the user equipment will log measurements throughout the MDT PLMN.

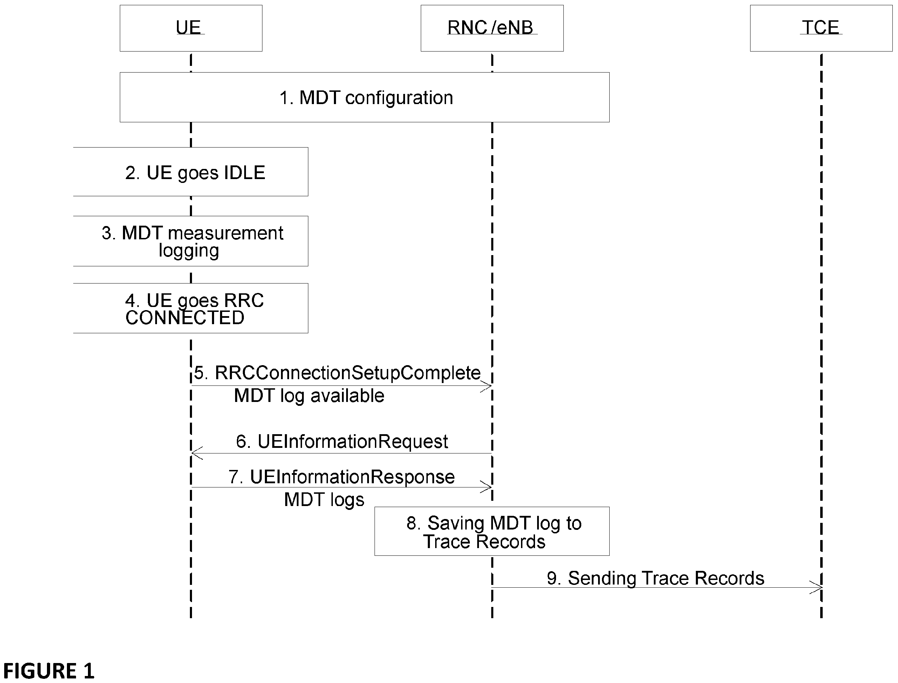

**Figure 1** illustrates a message sequence diagram of Logged MDT reporting. In case of Logged MDT, a MDT configuration for may be established for the user equipment (UE) by the base station (RNC/eNB) (step 1). Thereafter, the user equipment may enter an IDLE mode (step 2). The user equipment (UE) collects, or logs, the measurements while it is in IDLE mode (step 3). Once the user equipment goes to a RRC CONNECTED mode (step 4), the user equipment indicates a MDT log availability in a RRCConnectionSetupComplete message to the eNB/RNC (step 5). The user equipment will not indicate the availability of MDT measurements in another RAT or in another RPLMN.

When the eNB/RNC receives this indication it can request the MDT log, for example, if the user equipment is still in the same RAT type where the MDT configuration was done, by sending the UEInformationRequest message to the user equipment (step 6). The MDT logs are sent to the network in the UEInformationResponse message (step 7). The reporting may occur in different cells than which the logged measurement configuration is signaled. At the reception of the UEInformationResponse message the eNB/RNC shall save the received MDT log to the Trace Record (step 8).

The logged measurement report comprises measurement results for the serving cell, for example, the measurement quantity. The logged measurement report also comprises available user equipment measurements performed in idle for intra-frequency/inter-frequency/inter-RAT, time stamp and location information. The number of neighboring cells to be logged is limited by a fixed upper limit per frequency for each category, for example, 6 for intra-frequency neighboring cells, 3 for inter-frequency neighboring cells, etc. The measurement reports for neighbor cells comprise: a physical cell identity of the logged cell, carrier frequency, RSRP and RSRQ for EUTRA, RSCP and Ec/No for UTRA, P-CCPCH RSCP for UTRA 1.28 TDD, Rxlev for GERAN, and Pilot Pn Phase and Pilot Strength for CDMA2000.

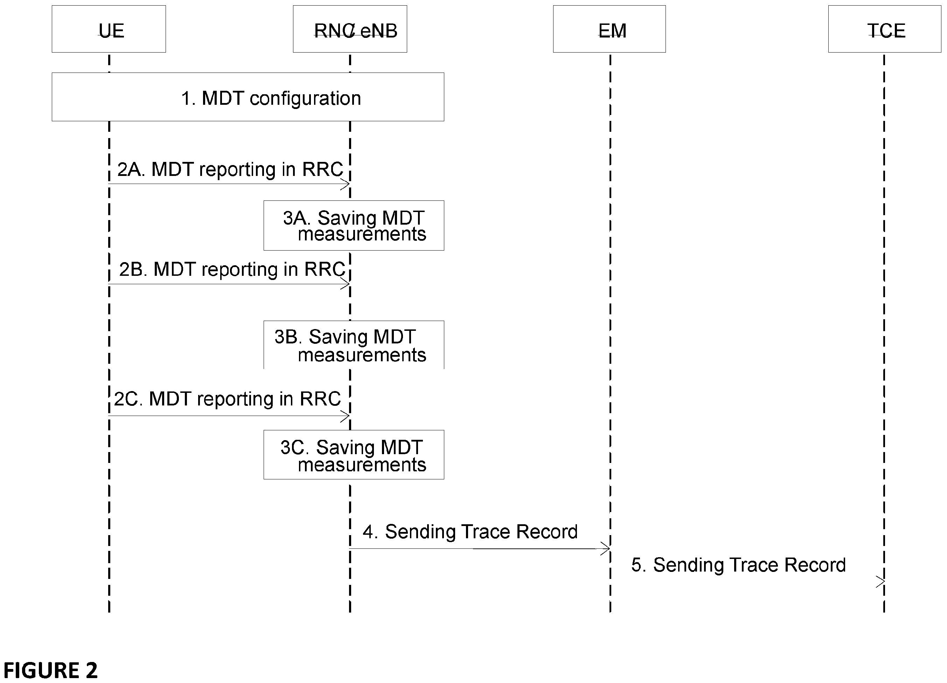

With respect to immediate MDT measurements, the MDT related measurements are sent in RRC as part of the existing RRC measurements. Whenever the eNB/RNC receives the MDT measurements it shall save it to a Trace Record. The Trace Records are sent to the TCE vie EM, where the EM can reside in the eNB/RNC (step 9). Immediate MDT measurement reports are periodic, for example, with intervals in the range of 120 ms to 1 hour, or event-triggered. Immediate MDT reporting is shown in **Figure 2****.**

As shown in Figure 2, the base station (RNC/eNB) may initially provide a MDT configuration for the user equipment (UE) (step 1). The MDT configuration may provide instructions for when MDT reporting should occur. Therefore, the user equipment may periodically report the MDT data in RRC (steps 2A-2C) and the RNC/eNB may receive and save the measured data (steps 3A-3C). After some time, the RNC/eNB may send a Trace Record to the TCE via the EM (steps 4 and 5).

Various problems arise in the systems illustrated in Figures 1 and 2. In the current 3GPP standard, the user equipment indicates to a serving network node the availability of MDT measurements in the user equipment. The collected measurements may be reported to the network only if allowed or requested by the network. Furthermore, sending the indication is only possible in CONNECTED state, i.e., there is no means to know prior handover to the node whether a certain node is a collector point or whether sending the collected measurements will be allowed by the specific collector node. If the collector node is in a MDT cell list, it is not possible to prevent the user equipment from sending user equipment indication messages even though the node may be not currently available for measurement or data collection. Another consequence is the unnecessary increase of user activity time and increased switching from IDLE to CONNECTED modes.

Furthermore, the user equipment must know the CGI of a cell, i.e., read system information, before it is able to know whether the cell belongs to the MDT cell list. Additionally, there is no cell selection procedure based on an identified proximity of a collector node, unless the collector node is a normal base station to which the user equipment would reselect for mobility purposes. It should also be appreciated that current systems do not allow a user equipment to change to a CONNECTED mode from an IDLE mode based on a determined proximity of a relevant and available collecting node.

Current systems also fail to provide mechanisms in a user equipment for identifying a proximity to a collector point which may not be a regular cell or a radio base station serving as a collector. For example, the user equipment may identify there is at least one other radio base station in a same area which does not provide collection service, and trigger a transmission to the collector point. In existing solutions, the procedure is initiated by user equipment, based on MDT cell lists and TA/LA/RA.

It should also be appreciated that current systems do not allow for the user equipment to be able to distinguish an area served by the collector node within a larger area of the entire cell. Further problems comprise that the collection of data or measurements may be performed by specific applications which are not available in all nodes. Examples of such nodes may be low-cost radio nodes deployed in the network. Furthermore, the collecting node may be temporarily unavailable. For example, such nodes may be occupied by a task, have a full memory, or have a low level of remaining energy. Additionally, depending on the collected information, not all the nodes in the same network may be eligible as the information collectors for certain information, e.g., due to security reasons.

A further consideration may be that the air interface may be currently high-loaded due to on-line data communication. Thus, there may be no resources for measurement and data collection, particularly given that collecting the measurements and data implies transmission of a large amount of data. For example, in such an instance, a user equipment may still send an indication to collect data and the eNB would not trigger the collected data transfer.

A need exists to improve the MDT methods described above to reduce the use of unnecessary system resources. Currently, not all nodes, as illustrated in Figures 1 and 2, may need to play a role in the collection of non-real time data, in general or at specific time occasions. Employing nodes dedicated to the collection of data would facilitate a better differentiation among radio nodes and enable cost-efficient deployments. Furthermore, a need exists to employ pro-active measurement reporting. Pro-active measurement report delivery would be more efficient from the resource consumption point rather than immediate reporting.

### Overview of the example embodiments

Accordingly, the example embodiments provided herein cover the following major aspects. Firstly, the example embodiments may comprise enhanced methods of collecting non-real time measurements and data by deploying specialized collector nodes. According to some of the example embodiments, the specialized collector nodes may be configured to create their cells for operation and/or share a cell with other radio nodes in the network.

Secondly, the example embodiments may comprise methods of indicating a collector node presence, capability, availability, load, etc., to a user equipment and other network nodes. Additionally, some of the example embodiments may comprise measurement and data collection initiation based on proximity of a collector node.

According to some of the example embodiments presented herein, a collector node may be a radio node. The collector node may be configured to receive or collect information. The information may comprise non-real time measurements or data from wireless devices or a mobile node. The collector node may be further configured to indicate its presence by, for example, sending an ID or indication of a collector node type. Furthermore, the collector node may be configured to provide its ability, for example, capability or availability, to provide information collection services.

The remainder of the text is arranged as follows. First, example embodiments directed towards the collection of non-real time measurements and/or non-real time data are provided under the sub-heading 'Radio collector nodes for collecting non-real time measurements and/or data'. Thereafter, example embodiments directed towards the activity state of a collector node and how such an activity state may be utilized during the collection of the non-real time measurements and/or data is provided under the sub-heading 'Collector node activity states'. Enhanced signaling for transferring data according to the example embodiments presented herein is described under the sub-heading 'Enhanced collection signaling'. Thereafter, example method steps which may be performed in a collector node and a user equipment are described under the sub-heading 'Example methods in a collector node' and 'Example methods in a user equipment', respectively. Thereafter, example node configurations and example node operations of a collector node, user equipment, or a radio node in general are provided under the subheadings 'Example node configurations' and 'Example node operations', respectively.

### Radio collector nodes for collecting non-real time measurements and/or data

Some of the example embodiments comprise a radio node (also referred to herein as a collector node or radio collector node) apparatus capable of non-real time measurement and data collection. The radio node may be capable of receiving information over the radio interface and transmitting radio signals to indicate the radio node's own presence. A collector node may be a radio network node, a wireless device (e.g., a user equipment in its general sense and may be capable of device-to-device or mobile-to-mobile communication), a special-purpose radio node, etc.

According to some of the example embodiments, the collector node may be a part of a wireless communications network, for example, the collector node may be registered as a node belonging to the network. Alternatively, the collector node may be a standalone radio node or it may belong to another PLMN. In the latter case, the collector node may be equipped with a radio interface for listening to radio signals of other radio network nodes of the wireless communications network. It should also be appreciated that the interface may be used, for example, for synchronization or reading system information in the network. The collector node may be able to perform sensing on the radio interface, for example, to detect the proximity of another radio node or another collector node, to identify a cell ID of a radio node, to determine the traffic activity in the area, etc.

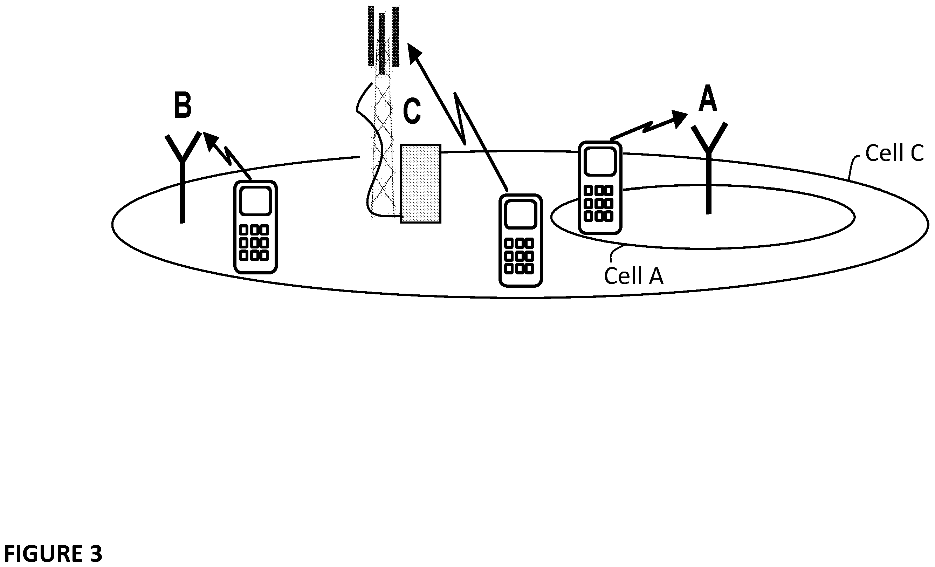

According to some of the example embodiments, the collector node may have to not create its own cell, but may share a cell with another node of the network or the collector node may be associated with another radio node. The shared cell information may be pre-configured in the collector node or may be obtained by the collector node, for example, by reading the system information. The shared cell embodiment is illustrated in Figure 3. As shown in Figure 3, the collector node B does not create its own cell be instead utilizes the cell it is located in (Cell C). Furthermore, collector node C is collector node is sharing radio antenna with eNodeB.

According to some of the example embodiments, if the collector node creates its own cell, the cell ID associated with the created cell may be decided autonomously by the collector node (e.g., based on neighbor cell information), may be pre-configured or may be received from another network node. It should be appreciated that the associated cell ID of the created cell may also be obtained by any other means known in the art. As shown in Figure 3, collector node A creates its own cell (Cell A).

According to some of the example embodiments, the collector node may have limited functionality compared to the functionality of a normal radio base station. For example, the collector node may or may not be capable of transmitting downlink data or the collector node may be not transmitting at least one of the physical signals or channels that are typical transmitted by a radio base station using the same radio technology. An example of such transmission may be not broadcasting MIB or any of the SIBs, PSS/SSS, certain reference signals such as CRS, or not transmitting certain control channels.

According to some of the example embodiments, a collector node may have at least one distinguished characteristic from a typical radio node. An example of such a characteristic may be a special database or additional memory for maintaining the collected information, a circuit for processing the collected information of a pre-defined type and/or format, or an interface to a special hub, etc. However, it should be appreciated that a normal radio network node, for example, a radio base station, pico base station, a relay node, a mobile relay node, or a femto base station, etc., may also be a collector node. The collector node may be a standalone radio node, or may share resources or equipment with other radio nodes, for example, an eNodeB, or may be integrated into other radio nodes.

According to some of the example embodiments, a collector node may be combined with entities providing public facilities. Examples of such entities may be bus stops, street lights, public transportation vehicles, a shop entrance, etc. Several collector nodes may or may not be connected to a hub, gateway, or a coordinating node in general.

According to some of the example embodiments, the collected measurements and/or data, may be sent to another user equipment or another network node. The collector node may maintain or communicate such measurements to a database, internal or external, for storage of the collected measurements and/or data.

According to some of the example embodiments, the collector may also perform processing of the collected measurements and/or data. Examples uses for processing may be generating statistics, aggregating the collected measurements, calculating average values, sorting databases, refreshing the database by removing old information, etc. The collector may also share or send the entire database, or at least some parts of it, to a user equipment or another network node, for example, a eNodeB, positioning node, a coordinating node, a central database, a hub or gateway node, etc. The collector node may also use different sources of power supplies, for example, a battery, sun battery, non-traditional energy sources or any of the prior-art energy sources.

### Examples of non-real time measurements and data

The information collected by collector node may comprise at least non-real time measurements or data. Examples of non-real time measurements may comprise any radio measurement or performance characteristic, which is not reported by the wireless device or user equipment in real-time (e.g., immediately).

According to some example embodiments, non-real time measurements may comprise MDT logs collected in an IDLE mode. It should be appreciated that in the example embodiments presented herein, measurement collection is not limited to any specific user equipment mode or state.

An example of radio measurements is power-based measurements, for example, received signal strength, signal quality, interference level, etc. Another example of a radio measurement is timing measurements, for example, one-way propagation delay, RTT, timing advance, time of arrival, time difference of arrival, etc. A further example of a radio measurement may be location and proximity measurements, for example, cell identity, node identity, network identity, location area identity, tracking area identity, positioning measurements in general, etc. Another example of a radio measurement may be direction measurements, for example, an angle of arrival. Yet another example of a radio measurement may be a power headroom measurement.

According to some example embodiments, the collected measurements may also be for a specific purpose, for example, positioning, MDT, RRM, or mobility, etc. It should also be appreciated that such collected measurements may be intra-frequency, inter-frequency, or inter-RAT. Examples of performance metrics may be MDT and MDT-like performance metrics, for example, throughput, bitrate, interference, channel quality statistics, or outage time, etc.

It should be appreciated that the example embodiments described herein may apply to a subset of MDT measurements, for example, collected over a longer time or for a specific purpose. The subset of MDT measurements may also comprise measurements collected in a specific user equipment state, for example, an IDLE state.

According to some of the example embodiments, collected data may comprise a file of a predefined format, for example, MP3, any text format, JPEG, BMP, a binary format, a movie format, an archive, etc. The data may be collected by the collector node for a general or any specific purpose, for example, sharing data within a group of users, collecting financial information, news collection, etc.

### Example uses of the collected measurements and/or data

Non-real time measurements may be distinguished by specific purpose, for example, mobility, MDT, positioning, etc. Similarly, data may differ by a specific purpose or format. According to some example embodiments, a collector node may specialize in collecting a specific measurement type or data type. The specialized type may also be indicated in the capability/availability indication.

According to some example embodiments, collected measurements may be used for different purposes. A few examples of such purposes may be MDT, network performance analysis, network optimization (e.g., site planning and/or configuration), SON, O&M, positioning (e.g., for populating fingerprinting, pattern matching or AECID database), navigation and location-based services, traffic and user equipment behavior information and statistics collection, and/or collecting statistics about active radio nodes in the area which may or may not belong to the same network.

According to some example embodiments, the collected data may be shared with other user equipments or nodes in the network, for example, the collector node may be a sharing hotspot. According to some example embodiments, the collected measurements and/or data may be transmitted to other network nodes or an external client, with or without storing the data in the collector node's memory. The transmission to another network node may occur, for example, upon receiving new measurements and/or data. The transmission may also occur upon accumulating a certain amount of measurements and/or data or receiving the measurements and/or data from a certain number of user equipments. The transmission may further occur when the remaining memory or storage space is below a certain threshold. Furthermore, the transmission may occur periodically or in a scheduled fashion, upon request from another node, and/or during a low-activity state. According to some example embodiments, an indication or a request may also be sent by the collector node prior transmitting the collected measurements and/or data.

### Examples of capability and availability for collecting measurements and/or data

According to some of the example embodiments, a collector may maintain an indication of its ability or current availability for collecting non-real time measurements and/or data. According to some of the example embodiments, the indication may further comprise a general capability of collecting non-real time measurements and/or data, a pre-defined specific node type associated with collector node, and/or a current availability/accessibility for collecting data. Examples of the availability /accessibility for collecting data may be a yes/no indication, high/medium/low indication, a busy indicator, 100% I >75% / >50% / >10% / 0% indication where 0% may mean "fully occupied with another task or not available for other reasons", etc., which may indicate a share of resource available for collection.

According to some of the example embodiments, the indication may also comprise a capacity associated with collecting. An examples of such a capacity may be a high/low capability, where high capacity may mean availability or capability for high-volume and/or high-speed data collection. A further example of a capability may be a set of measurements or data types which may be collected by the collector node. It should be appreciated that the set of measurements or data types may be pre-defined, configured or set statically, semi-statically or dynamically.

According to some of the example embodiments, the availability may be decided by the collector node based, for example, an availability of memory or storage space for the collected information (e.g., low availability if there is no more storage space). The availability may also be based on an activity state. The availability may further be based on a radio interface load, for example, the collector node may have low availability if there is a large amount of traffic in the area since the long-time heavy uploads may disturb the real-time traffic in the cell of the collector node or neighbor cells. The availability may also be based on radio interface availability for collecting non-real time measurements and/or data. For example, the collector node may be currently busy with transmitting over a radio interface in an uplink direction collected data to another network node and thus not available for receiving other data in an uplink direction.

Yet another example of availability is a measurement or data processing load. For example, a low availability for collecting data may be provided when the collector node is busy with high-capacity processing tasks, database maintenance tasks or real-time services. Another example of availability may be a remaining energy level, for example, a lower availability is provided when the battery of the collector node is low.

A further example of availability may be provided based on a user equipment being located in the same area as the collector node. According to some of the example embodiments, the collector node may be configured to operate according to a schedule or depending on a user equipment presence in the same cell or neighboring cells of the collector node. For example, if there is no or too few user equipments located in neighbor cells, the collector node may be deactivated.

### Collector node activity states

Since collector nodes may be intended for non-real time measurement and data collection, it may be envisioned, in at least some scenarios, that the service provided by the collector node is of a lower priority than, for example, real-time services. The priority associated with a given collector node may also depend on the density of deployed collector nodes in an area, for example, with a higher density there may be a higher probability that a user equipment may find another collector node.

According to some of the example embodiments, a collector node may switch, dynamically or semi-dynamically, between at least two states. Examples of such states may be a higher/ON activity state and a lower/OFF activity state. The transition between the states may be configured (e.g., scheduled or periodically configured), controlled by a network node (e.g., a coordinating node, an associated eNodeB, etc.) or performed autonomously by the collector node. The autonomous decision made by a collector node to go to a lower/OFF activity state may be triggered by a condition related to any availability factors. Examples of such availability factors may comprise insufficient available memory or storage space (e.g., below a threshold), determined high interference in the area (e.g., above a threshold), determined high interference or activity from a specific node (e.g., the associated nearby eNodeB), no user equipments being determined in the area (e.g., based on sensing or the number of active users information received from a neighbor cell for example via X2 interface). It should be appreciated that the availability factors may be any availability factor discussed herein.

According to some of the example embodiments, a network node may assign an activity state to the collector node based on, for example, estimating the interference situation in the area or cell, signal quality, monitored performance, or on the information received from the collector node (e.g., indication of collector node's availability for collecting non-real time measurements and/or data).

According to some of the example embodiments, the transition to the high/ON activity state may be decided based on similar criteria or information, as discussed above. During a low/OFF activity state (e.g., associated with collecting), the collector node may perform other tasks such as database maintenance.

According to some of the example embodiments, when a radio base station plays the role of a connector node, the collector node's (e.g., a logical entity associated with the BS in this case) activity states are not necessarily strongly connected to the base station activity states. For example, a high/ON activity state of the radio base station does not necessarily imply high/ON activity state of the collector node. According to some of the example embodiments, the activity state of the collector node may also change upon receiving a message from another node.

### Enhanced collection signaling

### Signaling means for controlling the activity state of a collector node

According to some of the example embodiments, a collector node may change its activity state upon receiving a message from another network node, for example, a radio network node, a relay node, a core network node such as SON or O&M node, an MDT node, or a coordinating node in general. According to some of the example embodiments, a collector may receive an indicator from another network node. The indicator may be sent via unicast, multicast or broadcast. The indicator may indicate the collector node's activity state may change from low to high or from high to low.

According to some of the example embodiments, a network node may send its own activity state, or indication related to an activity state, to the collector node. The indication may relate to, for example, active transmissions, transmission probability, transmit power level, a number of served user equipments, spectrum utilization, etc. The received indication of a low activity of the sending node may imply that the collector node may also go to a low activity state. For example, when the collector node is sharing a cell ID with sending network node or the collector node has a limited functionality compared to a normal base station.

According to some of the example embodiments, the collector node may receive another node's (e.g., another collector node or another network node) activity state information and may decide to change own activity in the opposite direction. For example, a low activity state of another node may trigger a higher activity of the collector node and the other way around. Similarly, a high activity state of another node may trigger a lower activity of the collector node. Such transmissions may be useful, for example, when the two communicating nodes are neighbor nodes are have similar functionality. In a non-limiting example, a neighbor collector node may go to a lower activity state due to a low remaining energy level and the collector node may thus go to a higher activity state to take over all or some of the service of the neighbor node.

According to some of the example embodiments, the indication received from another network node may not necessarily trigger a general activity state change of the physical node capable of measurement or data collection, but it may trigger a change of the activity state associated with collecting measurements and/or data. Furthermore, the received indication may trigger a change of the activity state with respect to collecting a specific type of measurements or data.

### Signaling of activity state and availability for collection

According to some of the example embodiments, the collector node may transmit an indication of its capability or availability for collecting non-real time measurements and/or data. The transmission may be unicast, multicast or broadcast. The transmission may be a single transmission or periodic and the transmission may be over a radio interface (e.g., to a user equipment) or any other interface (e.g., an X2 interface to a network node).

The indication may be transmitted via higher-layer signaling (e.g., as a protocol message) or via lower-layer signaling (e.g., a bit indicator in a control channel or system information in a broadcast channel). The indication may also be indirectly comprised in a physical signal transmission (e.g., a radio collector node in the high/ON activity state may transmit a pre-defined beacon signal which would not be transmitted in the low/OFF activity state).

The transmission of the indication may depend on an activity state, for example, the indication may be not transmitted in the low/OFF activity state or the indication transmitted in the low activity state may be different from that of an indication transmitted in the high activity state. The indication may be signaled by the radio node to a target node (e.g., another node or a user equipment) in different ways. Such transmissions may be performed pro-actively, upon receiving an explicit request or activation indication from another network node or the transmission may be triggered by a certain event. Examples of triggering may be at a pre-defined occasion such as at initial setup or reconfiguration, associating or re-associating to another radio node, a handover event to the collector node, upon determining a user equipment or a radio node in the area or some traffic activity in the area, changing the activity state, etc.

The transmission may be performed in response to a triggering condition, for example, a user equipment in close proximity (e.g., based on signal strength comparison), a sufficient amount of memory or storage space may become available, the interference in the area or from a certain cell is below a certain threshold, a load indicator received from a neighbor node is below a threshold or indicates low load, etc.

According to some of the example embodiments, the activity state information may be comprised in the indication or may be used to derive the indication. The activity state information may be a separate information element which may be signaled. Therefore, the ways of transmitting (unicast/multicast/broadcast, interfaces, higher/lower layer signaling, etc.) and the ways of signaling the activity state information may be, for example, any of those described for signaling the indication.

The information described herein may be signaled to user equipment (or multiple user equipments in case of broadcast), to a radio network node (e.g., eNodeB, RNC), to another network node (e.g., any core node, MDT node, SON node, O&M, a hub node, a coordinating node, a positioning node, etc.), or to a node external to the network (e.g., a node maintaining a database or a controlling node). The information may also be transparently signaled via a user equipment or another node (e.g., to eNodeB via UE).

### Signaling of the memory or storage space load

As previously described under the sub-heading '*Signaling of activity state and availability for collection',* the memory availability and storage space availability may be comprised in a more general availability indicator. According to some of the example embodiments, separate indicators may be used for the memory and storage space load.

According to some of the example embodiments, a collector node may dynamically maintain a separate load indicator reflecting the availability of memory (e.g., internal or external) and/or storage space used for storing the collected measurements and data. The load indicator may be a binary indicator (e.g., high/low) or descriptive indicator (e.g., full, medium or low load). The transmission of such information may be provided by any means described herein.

According to some of the example embodiments, the load indicator may also be viewed as an overload indicator associated with the memory and/or storage space which may be used by the collector node. The overload indicator may be signaled may any means described herein or only when the available memory or storage space approaches a certain minimum.

### Signaling of an availability of or a request for resources

The collected measurements and/or data may be further transmitted to another network node or an external client, with or without storing the collected in formation in the collector node's memory. An indication of availability or a request for resources to transmit the collected measurements and/or data may be sent by the collector node prior to transmitting the collected measurements and/or data from multiple user equipments. It should be appreciated that such transmissions may be unicast, broadcast or multicast and may comprise transmissions to any number of user equipments or network nodes.

According to some of the example embodiments, the indication may be a binary indicator. According to some of the example embodiments, the indicator may comprise an indication of the amount of data available for transmission (e.g., X GB) or the amount of resources needed for the transmission (e.g., a number of time slots). The indication may also comprise a list of available measurements and/or data (e.g., when the collector node is also a sharing hotspot node) or measurement types. The further transmission may then depend on the list of available measurements and/or data.

### Example methods in a collector node

Under this sub-heading, non-limiting examples of steps that may be implemented in a collector node are provided. It should be appreciated that the steps may be performed in any order. It is also evident from the earlier described embodiments that some of the steps may be repeated, e.g., periodically, upon a trigger or following a certain rule. For example, the activity state may be updated dynamically or based on the message received from another node. Furthermore, the availability indicator may also be updated dynamically depending on the availability factors described in more detail in other sections.
Example step 1: Maintaining a capability indicator associated with the collecting of non-real time measurements and/or data, as discussed under the sub-heading '*Radio collector nodes for collecting non-real time measurements and*/*or data'.*
Example step 2: Determining and/or changing the activity state related to the collecting of non-real time measurements and/or data, as described under the subheadings *'Activity states of a collector node'* and *'Enhanced signaling means'.* Example step 2 may result in:
   Example step 2a: Receiving a message from another node.
Example step 3: Obtaining an availability indicator associated with the collecting of non-real time measurements and/or data, as explained under the sub-heading entitled *'Radio collector nodes for collecting non-real time measurements and*/*or data'.* Example step 4 may result in any one or more of the following example steps:
   Example step 3a: Receiving information from another node,
   Example step 3b: Performing radio measurements, and/or
   Example step 3c: Estimating the availability of own resources available for collecting measurements and/or data.
Example step 4: Signaling to at least one of a user equipment and/or another node:
   Example step 4a: a capability indicator, as described under sub-heading *'Enhanced signaling means',*
   Example step 4b: an availability indicator, as described under sub-heading *'Enhanced signaling means',*
   Example step 4c: an activity state indicator, and/or
   Example step 4d: a memory and storage space indicator.
Example step 5: Receiving non-real time measurements and/or data from at least one user equipment. The received measurements and/or data may be any one or more of:
   Example step 5a: Stored in an internal or external memory, and/or
   Example step 5b: Transmitted to another node (e.g., a user equipment or a network node).
Example step 6: Using, sharing or transmitting the collected non-real time measurements and/or data, which may also comprise any one or more of:
   Example step 6a: Storing the collected measurements and/or data,
   Example step 6b: Sending an indication of the availability of the measurements and/or data collected from multiple user equipments,
   Example step 6c: Transmitting all or a part of the collected measurements and/or data. It should be appreciated that the transmitting may occur upon a request received in relation to the sent indication of the availability of the collected measurements and/or data and the request may concern any part of the collected measurements and/or data indicated in the indication.

### Example methods in a user equipment

Under this sub-heading, non-limiting example of steps that may be implemented in a user equipment are provided. It should be appreciated that the steps may be performed in any order. It should further be appreciated that any other steps, which are not listed below, may also be implemented in the user equipment. The example steps will be provided for two example use cases.

### Example use case 1:

Example steps performed by a user equipment when transmitting non-real time measurements and/or data to a collector node.
Example step 1: Determining proximity of a collector node. The proximity may comprise any one or more of:
   Example step 1a: a presence (e.g., detecting a signal from a pre-determined set),
   Example step 1b: a proximity which is indicative of distance or an absolute location of a collector node or relative location with respect to the user equipment (e.g., determining a signal strength above a threshold or obtaining the collector node's location from an internal database by mapping its ID), where the proximity may be determined with or without the other node's assistance information, and/or
   Example step 1c: the node's collector capability, node's availability or activity state associated with collecting measurements and/or data, where the indication may also indicate a type of measurements and/or data that can be collected by the node.

   It should be appreciated that the proximity may be determined by the user equipment autonomously, for example, based on radio measurements and/or a pre-defined set of IDs (e.g., of potential collector nodes), or by receiving at least one descriptive indicator from a collector node such as capability, availability, state, etc.
Example step 2: Estimating, by the user equipment, the power or energy consumption necessary to transmit the measurements and/or data, for example, based on the determined proximity (e.g., a strong signal is typically an indication of a close location and likely good signal quality and thus lower transmit power may be needed). The collector node which is close enough to the user equipment, for example, having a good signal strength or quality, may be considered for further transmitting of non-real measurements and/or data.
Example step 3: The user equipment may also decide to send or to not send an indication of available MDT measurements, for example, based on the determined proximity and/or received indication. For example, there is no reason to send the user equipment indication to a node which is not capable of or not currently available for collecting the measurements and/or data.
   An advantage with proximity-based triggering of transmitting measurements and/or data to a collector node is that the collector node may not create its own cell but may share the cell with a normal eNodeB. The cell may be large, whilst the service coverage of the collector node may be smaller. With proximity detection of the collector node the data collection procedures may be initiated in the proximity of the collector node.
Example step 4: Changing a user equipment activity state, for example, from an IDLE to a CONNECTED mode, and/or, based on the determined proximity and/or received indicator, decide whether a handover is needed. For example, if the transmitting of the non-real measurements and/or data to a collector node is the target activity, then the user equipment may choose to select to handover to a radio node with the collector node capability or the radio node which is available for collecting such measurements or data. Correspondingly, the user equipment may choose to not perform a handover if the node is not capable of collecting or is not available. The handover may be performed in a CONNECTED state, so the user equipment may choose to change (or not) from the IDLE state.
Example step 4: Transmitting non-real time measurement and/or data to the collector node.

### Example use case 2:

Example steps performed by a user equipment when requesting a subset of the information from a sharing hotspot point. The example in this section may happen in practice, for example, when a collector node is also an information sharing hotspot point.
Example step 1: Determining proximity of a collector node, either autonomously (e.g., based on a cell ID or node ID which may be used by a collector node) or based on a received indication from a collector node indicating the availability of the non-real time measurements and/or data. The indication may also comprise the contents of the available information (e.g., a list of measurement types or data types or data categories).
Example step 2: Sending a request for a subset of the information collected by the collector node. The sending may further comprise an indication of a selected type or category from the received list.
Example step 3: Receiving the information from the collector node, according to the request.

### Example node configurations

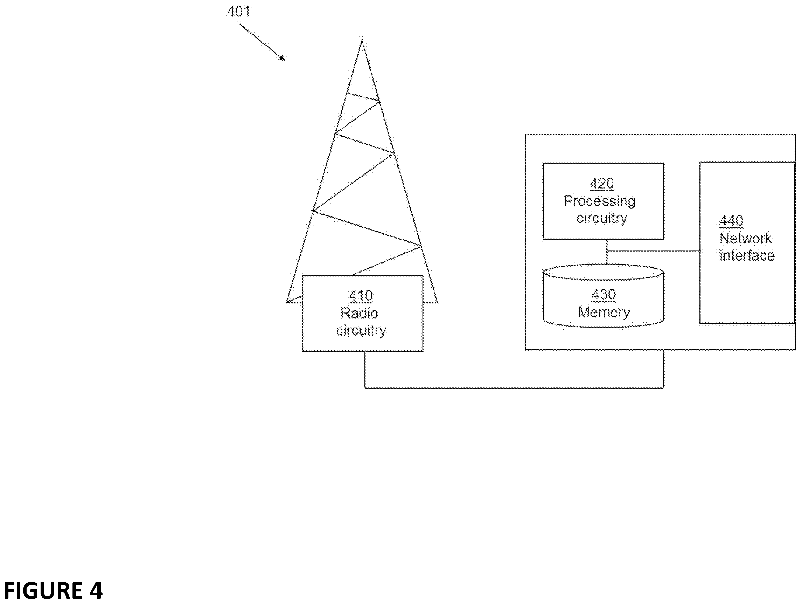

**Figure 4** illustrates an example node configuration of a collector node 401 which may perform some of the example embodiments described herein. The collector node 401 may comprise radio circuitry or a communication port 410 that may be configured to receive and/or transmit communication measurements, data, instructions, and/or messages. The collector node 401 may further comprise a network interface 440 which may be configured to receive or send network communications. It should be appreciated that the radio circuitry or communication port 410 may be comprised as any number of transceiving, receiving, and/or transmitting units or circuitry. It should further be appreciated that the radio circuitry or communication 410 may be in the form of any input or output communications port known in the art. The radio circuitry or communication 410 and/or network interface 440 may comprise RF circuitry and baseband processing circuitry (not shown).

The collector node 401 may also comprise a processing unit or circuitry 420 which may be configured to perform operations related to the collection or handling of non-real time measurements and/or data. The processing circuitry 420 may be any suitable type of computation unit, e.g. a microprocessor, digital signal processor (DSP), field programmable gate array (FPGA), or application specific integrated circuit (ASIC), or any other form of circuitry. The collector node 401 may further comprise a memory unit or circuitry 430 which may be any suitable type of computer readable memory and may be of volatile and/or non-volatile type. The memory 430 may be configured to store received, transmitted, and/or measured data, device parameters, communication priorities, and/or executable program instructions.

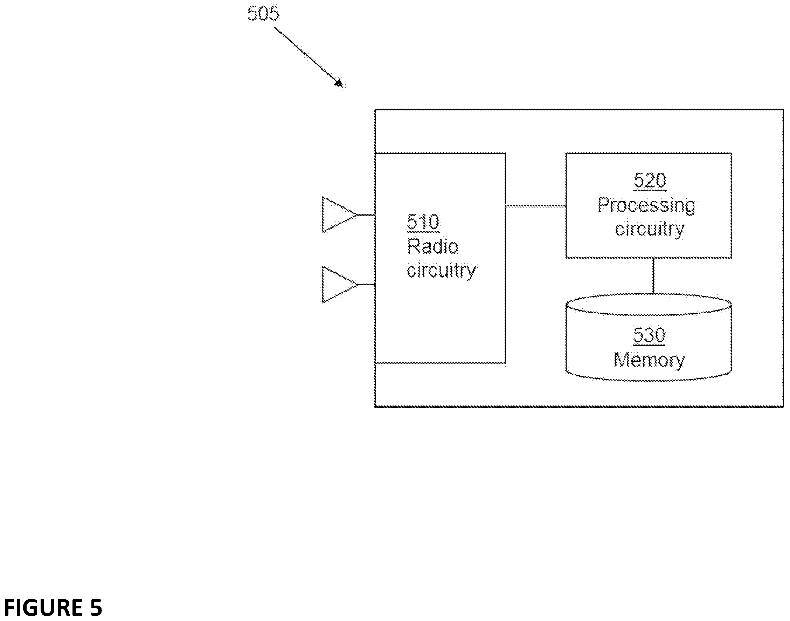

**Figure 5** illustrates an example node configuration of a user equipment 505 which may perform some of the example embodiments described herein. The user equipment 505 may comprise radio circuitry or a communication port 510 that may be configured to receive and/or transmit communication measurements, data, instructions, and/or messages. It should be appreciated that the radio circuitry or communication port 510 may be comprised as any number of transceiving, receiving, and/or transmitting units or circuitry. It should further be appreciated that the radio circuitry or communication 510 may be in the form of any input or output communications port known in the art. The radio circuitry or communication 510 may comprise RF circuitry and baseband processing circuitry (not shown).

The user equipment 505 may also comprise a processing unit or circuitry 520 which may be configured to perform operations related to the collection or handling of non-real time measurements and/or data. The processing circuitry 520 may be any suitable type of computation unit, e.g. a microprocessor, digital signal processor (DSP), field programmable gate array (FPGA), or application specific integrated circuit (ASIC), or any other form of circuitry. The user equipment 505 may further comprise a memory unit or circuitry 530 which may be any suitable type of computer readable memory and may be of volatile and/or non-volatile type. The memory 530 may be configured to store received, transmitted, and/or measured data, device parameters, communication priorities, and/or executable program instructions.

### Example node operations

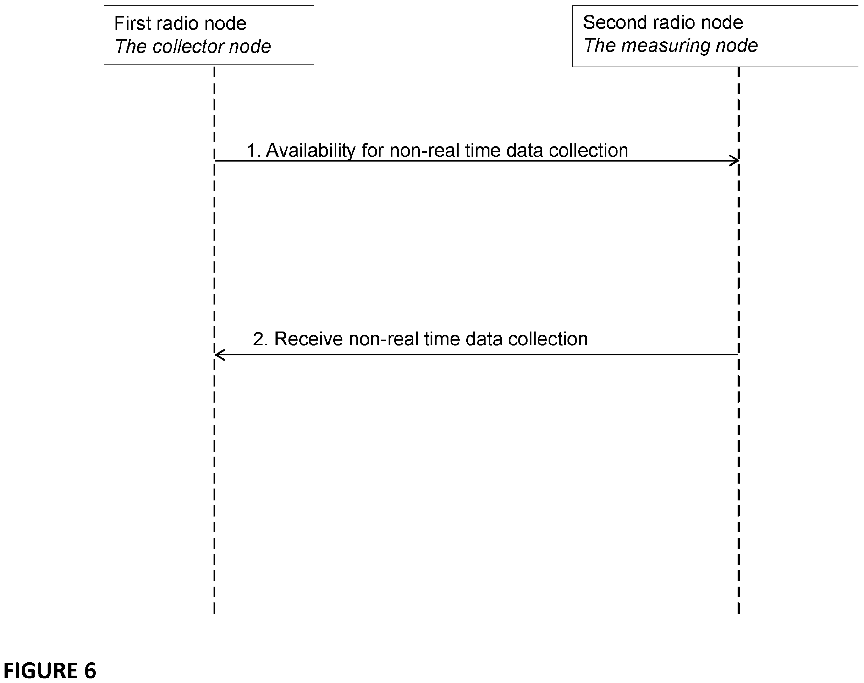

**Figure 6** provides an illustrative overview of some of the example embodiments presented herein. Generally, a first radio node (e.g., a collector node) may be configured to provide information regarding the first radio node's availability for collecting non-real time measurements and/or data (step 1). This information may be sent to a second radio node (e.g., a measuring node) which may be configured to obtain the non-real time measurements and/or data. In response to the sent information, the second radio node may send the non-real time measurements and/or data to the first radio node (step 2).

It should be appreciated that in the example operations provided herein a first radio is a node which provides the functionality of a collector node and the second radio node is a node which provides the functionality a user equipment (which is taking said measurements), as described herein. It should further be appreciated that the first radio node and the second radio node may be any combination of a user equipment, a radio base station, a coordinating node, a central database, a hub, positioning node, eNodeB, a gateway node, or a specialized radio node.

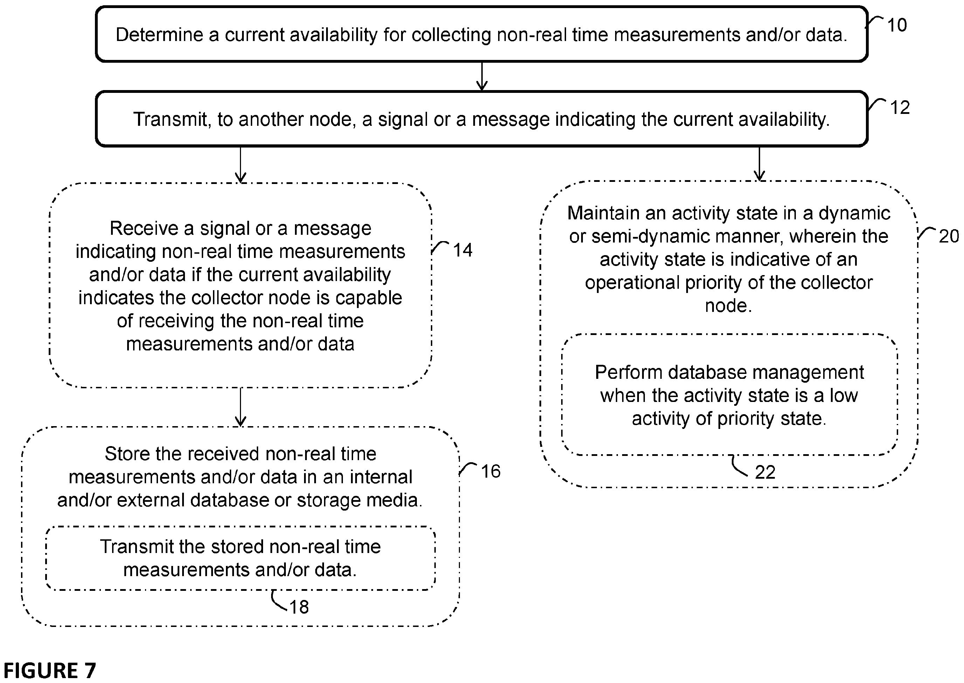

**Figure 7** is a flow diagram depicting example operations which may be taken by the first radio node of Figure 4 for the collection of non-real time measurements and/or non-real time data. It should also be appreciated that Figure 7 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination. It should be appreciated that according to some of the example embodiments presented below the first radio node may be an eNodeB and the second radio node may be a wireless device. According to some of the example embodiments, the first radio node may be a wireless device and the second radio node by also be a wireless device.

### Example operation 10

According to some of the example embodiments, the first radio node 401 may be configured to maintain 10 an activity state of the first radio node 401 in a dynamic or semi-dynamic manner. The activity state is indicative of an operational priority of the first radio node. The processing circuitry 420 may be configured to maintain the activity state of the first radio node in a dynamic or semi dynamic manner.

According to some of the example embodiments, the maintaining 10 of the activity state may be based on one or more of an insufficient available memory or storage space, a level of interference in an area where the first radio node is situated, a level of interference or activity from a specific or nearby node, and a user equipment presence in an area where the first radio node is situated. The maintenance of the activity state is described further under at least sub-heading *'Collector node activity states'.*

### Example operation 11

According to some of the example embodiments, the first radio node 401 may further be configured to determine 11 an ability for collecting non-real time measurements and/or non-real time data based on the activity state. The processing circuitry 420 may be configured to determine the ability for collecting the non-real time measurements and/or the non-real time data based on the activity state. The determination of the ability is further explained under at least the sub-heading '*Examples of capability and availability for collecting measurements and*/*or data'.*

### Example operation 12

According to some of the example embodiments, the first radio node 401 may be further configured to determine 12 the ability for collecting the non-real time measurements and/or the non-real time data based on one or more of a capability associated with collecting non-real time measurements and/or non-real time data, a current availability for collecting non-real time measurements and/or non- real time data, an availability of memory or storage space for the non-real time measurements and/or non-real time data, a radio interface load, a measurement processing load and/or a data processing load, a remaining battery energy level, a user equipment presence in an area where the first radio node is situated, an activity state of the first or the at least one second radio nodes, a radio interface capacity or processing capacity associated with collecting, a pre-defined specific node type associated with the first radio node, and types of measurements or data types which are capable of being collected by the first radio node.

The processing circuitry 420 may be configured to determine the ability for collecting the non-real time measurements and/or non-real time data based on one or more of the elements listed above.

### Operation 14

The first radio node 401 is configured to transmit 14, to at least one second radio node 505, a signal or a message indicating an ability for collecting non-real time measurements and/or non-real time data. The radio circuitry 410 is configured to transmit, to the at least one second radio node, the signal or message indicating the ability for collecting non-real time measurements and/or non-real time data. According to some of the example embodiments, the at least one second radio node 505, may be the node which is taking the non-real time measurements and/or data.

According to some of the example embodiments, the at least one second radio node may be a user equipment, or any other node in the network which contains non-real time measurements and/or data. Examples of such transmissions are further explained under at least the sub-heading '*Enhanced collection signaling'.*

### Example operation 15

According to some of the example embodiments, the first radio node 401 may further be configured to send, to a neighbor network node, a message indicating the ability for collecting the non-real time measurements and/or non-real time data. The radio circuitry may be configured to send, to the neighbor network node, the message indicating the ability for collecting the non-real time measurements and/or non-real time data.

According to some of the example embodiments, the neighbor network node may be a base station, another collector node, or any other node which may be involved in the collection of non-real time measurements and/or data. Examples of such transmissions are further explained under at least the sub-heading *'Enhanced collection signaling'.*

### Operation 16

The first radio node 401 is further configured to receive 16, from the at least one second radio node 505 , the non-real time measurements and/or non-real time data in response to the signal or message indicating the ability. The radio circuitry 410 is configured to receive, the from at least one second radio node 505, the non-real time measurements and/or non-real time data in response to the signal or message indicating the ability. According to some of the example embodiments, the at least one second radio node 505 may be a user equipment, or any other node in the network which contains non-real time measurements and/or data. Examples of such communications are further explained under at least the sub-heading *'Enhanced collection signaling'.*

### Example operation 18

According to some of the example embodiments, the first radio node 401 may be further configured to share 18 a cell and a corresponding cell identification with a base station in proximity to the first radio node. The processing circuitry 420 may be configured to share a cell and a corresponding cell identification with a base station in proximity to the first radio node. An example of cell sharing is provided in at least Figure 3.

### Example operation 19

As an alternative to the sharing 18, according to some of the example embodiments, the first radio node 401 may be configured to create 19 the cell and corresponding cell identification for operating in the wireless communications network. The processing circuitry 420 may be configured to create the cell and the corresponding cell identification for operating in the wireless communications network. An example of cell creating is provided in at least Figure 3.

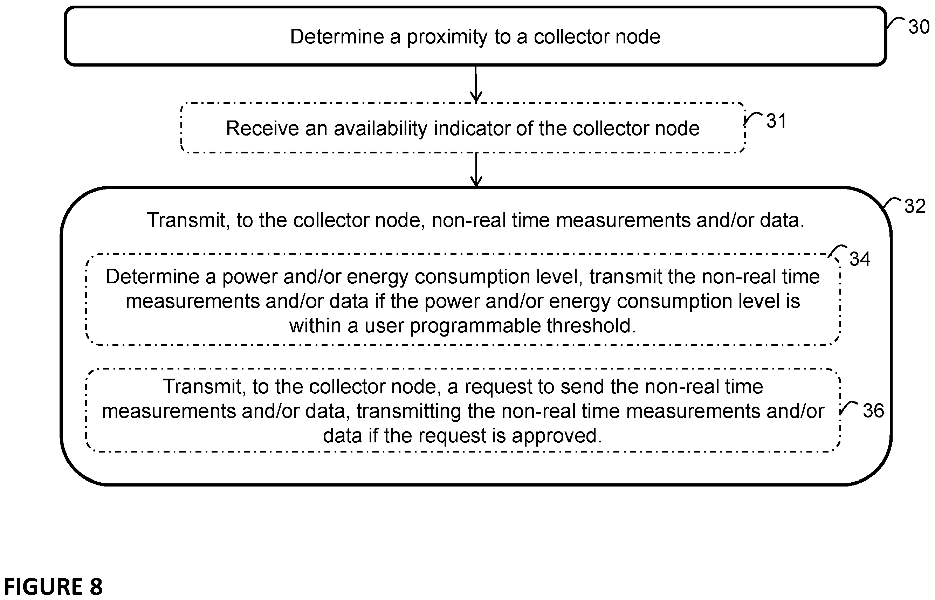

**Figure 8** is a flow diagram depicting example operations which may be taken by the first radio node of Figure 5 for the handling of non-real time measurements and/or data. It should also be appreciated that Figure 8 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination. It should be appreciated that according to some of the example embodiments presented below the first radio node may be an eNodeB and the second radio node may be a wireless device. According to some of the example embodiments, the first radio node may be a wireless device and the second radio node by also be a wireless device.

### Operation 30

The second radio node 505 is configured to receive 30, from the first radio node 401, a signal or message indicating an ability of the first radio node 505 to collect the non-real time measurements and/or non-real time data. The radio circuitry 510 is configured to receive, from the first radio node 401, the signal or message indicating the ability of the first radio node 505 to collect the non-real time measurements and/or non-real time data.

According to some of the example embodiments, the ability may comprise any one or more of a capability associated with collecting non-real time measurements and/or non-real-time data, a current availability for collecting non-real time measurements and/or non-real-time data, and an activity state associated with collecting non-real time measurements and/or non-real-time data. Examples of such ability are provided in at least sub-heading *'Examples of capability and availability for collecting measurements and*/*or data'.* Examples of the signaling are described in operation 30 is described under at least sub-heading '*Signaling of an availability of or a request for resources'.*

### Example operation 31

According to some of the example embodiments, the second radio node 505 may be configured to receive 31, from the collector node, an availability indicator of the collector node for receiving non-real time measurements and/or data. The radio circuitry 510 may be configured to receive, from the collector node, the availability indicator.

### Operation 32

The second radio node 505 is further configured to transmit 32, to the first radio node 401, the non-real time measurements and/or data in response to the received signal or message. The radio circuitry 510 is configured to transmit, to the first radio node 401, the non-real time measurements and/or data in response to the received signal or message. Examples of the signaling are described in operation 30 is described under at least sub-heading *'Enhanced collection signaling'.*

### Example operation 34

According to some of the example embodiments, the second radio node 505 may be further configured to determine 34 a proximity to the first radio node 401. The transmitting 32 may be performed, at least in part, based on the determined proximity. The processing circuitry 520 may be configured to determine the proximity to the first radio node 401. Therefore, based on how close the second radio node may be to the first radio node, the second radio node may choose to continue with the transmission or may choose which information to transmit based on the transmission.

According to some of the example embodiments, the determination of the proximity may be based on the first radio node's ability and/or activity state associated with collecting the non-real time measurements and/or non-real time data.

According to some of the example embodiments, the determination of the proximity may be performed based on a pre-defined set of identifications of potential radio nodes collecting the non-real time measurements and/or non-real time data. The example embodiments of example operation 34 are described at least under sub-heading *'Enhanced collection signaling'.*

### Conclusion

The user equipment (UE) or wireless device herein should be understood by the skilled in the art that "UE" is a non-limiting term comprising any wireless device or node equipped with a radio interface allowing for at least one of: transmitting signals in UL and receiving data and/or measuring signals in DL. Some examples of UE in its general sense are PDA, laptop, mobile, sensor, fixed relay, mobile relay, a radio network node. Some radio nodes may also be equipped with a UE-like interface, e.g., femto BS aka home eNodeBs, relays, mobile relays, or small base stations using the terminal technology. A UE herein may comprise a UE (in its general sense) capable of operating or performing measurements in one or more frequencies carrier frequencies, component carriers or frequency bands. It may be a "UE" operating in single- or multi-RAT or multi-standard mode (e.g., an example dual-mode UE may operate with any one or combination of WiFi and LTE or HSPA and LTE).

The UE is served by or associated to a cell. A cell is associated with a radio node, where a radio node or radio network node or eNodeB used interchangeably in the description of the example embodiments, comprises in a general sense any node transmitting radio signals in DL and/or receiving radio signals in UL. Some examples of radio network nodes are eNodeB, Node B, RNC, macro/micro/pico radio base station, home eNodeB, relay, repeater, sensor, transmitting-only radio nodes or receiving-only radio nodes. A radio network node herein may comprise a radio node operating or at least performing measurements in one or more frequencies, carrier frequencies or frequency bands. It may be a radio node capable of CA. It may also be a single- or multi-RAT or multi-standard node, e.g., using the same or different base band modules for different RATs.

Multiple serving cells are possible with carrier aggregation, so "a serving cell" is in general used throughout the description for CA and non-CA systems. With CA, primary cell (PCell) is one example of a serving cell, and another example is a secondary cell (SCell). For a UE in RRC_CONNECTED not configured with CA there is only one serving cell comprising of the primary cell. For a UE in RRC_CONNECTED configured with CA the term 'serving cells' is used to denote the set of one or more cells comprising of the primary cell and all secondary cells.

A radio node may also be a radio node which does not create own cell, but still transmitting some DL signals or receiving some signals in UL.

A subframe may be LTE subframe or any time interval or time slot, which may be pre-defined.

The term "centralized network management node" or "coordinating node" used herein is a network node, which may also be a radio network node, which coordinates radio resources with one or more radio network nodes and/or UEs. Some examples of the coordinating node are network monitoring and configuration node, OSS node, O&M, MDT node, SON node, positioning node, a gateway node such as Packet Data Network Gateway (P-GW) or Serving Gateway (S-GW) network node or femto gateway node, a macro node coordinating smaller radio nodes associated with it, etc.

The signaling described in the example embodiments is either via direct links or logical links (e.g. via higher layer protocols and/or via one or more network nodes). For example, signaling from a coordinating node may pass another network node, e.g., a radio node.

It should be appreciated that a radio node may be, e.g. associated with a cell, eNodeB and so on. It should also be appreciated that the term another node, may be either a user equipment or network node. A network node may be e.g. a radio network node such as eNodeB or core network node such as positioning node. A radio node in general may be, e.g., a user equipment, eNodeB, coordinating node, positioning node, another collector node, an associated eNodeB, etc.

The example embodiments are not limited to LTE, but may apply with any Radio Access Network (RAN), single- or multi-RAT. Some other RAT examples are LTE-Advanced, UMTS, GSM, cdma2000, WiMAX, and WiFi.

Embodiments (sections) described herein may be considered as independent embodiments or may be considered in any combination with each other to describe non-limiting examples of the example embodiments described herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

A "device" as the term is used herein, is to be broadly interpreted to include a radiotelephone having ability for Internet/intranet access, web browser, organizer, calendar, a camera (e.g., video and/or still image camera), a sound recorder (e.g., a microphone), and/or global positioning system (GPS) receiver; a personal communications system (PCS) terminal that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, vehicle etc.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

## Claims

1. A method, in a first radio node **(401),** for collecting non-real time measurements and/or non-real time data, the first radio node **(401)** being configured for use in a wireless communications network, the method comprising:
transmitting **(14),** to at least one second radio node **(505),** a signal or a message indicating an ability for collecting said non-real time measurements and/or non-real time data;
receiving **(16),** from the at least one second radio node **(505),** said non-real time measurements and/or non-real time data in response to the signal or message indicating the ability; and
receiving, from the at least one second radio node **(505),** further non-real time measurements and/or non-real time data, when the at least one second radio node **(505)** has chosen, based on a proximity to the first radio node **(401),** to continue with further transmitting the non-real time measurements and/or non-real time data.

2. The method of claim 1, further comprising sending **(15)** to a neighbor network node a message indicating the ability for collecting said non-real time measurements and/or non-real time data.

3. The method of any of claims 1-2, further comprising determining **(12)** the ability for collecting said non-real time measurements and/or non-real time data is based on any one or more of: a capability associated with collecting non-real time measurements and/or non-real time data, a current availability for collecting non-real time measurements and/or non- real time data, an availability of memory or storage space for the non-real time measurements and/or non-real time data, a radio interface load, a measurement processing load and/or a data processing load, a remaining battery energy level, a user equipment presence in an area where the first radio node is situated, an activity state of the first or the at least one second radio nodes, a radio interface capacity or processing capacity associated with collecting, a pre-defined specific node type associated with the first radio node, and types of measurements or data types which are capable of being collected by the first radio node.

4. The method of any of claims 1-3, further comprising:
maintaining **(10)** an activity state of the first radio node **(401)** in a dynamic or semi-dynamic manner, wherein said activity state is indicative of an operational priority of the first radio node; and
determining **(11)** the ability for collecting said non-real time measurements and/or non-real time data based on said activity state.

5. A first radio node **(401)** for collecting non-real time measurements and/or non-real time data, the first radio node **(401)** being configured for use in a wireless communications network, the first radio node **(401)** comprising:
radio circuitry **(410)** configured to send, to at least one second radio node **(505),** a signal or a message indicating an ability for collecting said non-real time measurements and/or non-real time data;
the radio circuitry **(410)** is further configured to receive, from the at least one second radio node **(505),** said non-real time measurements and/or non-real time data in response to the signal or message indicating the ability; and
the radio circuitry **(410)** is further configured to further receive, from the at least one second radio node **(505),** the non-real time measurements and/or non-real time data, when the at least one second radio node **(505)** has chosen, based on a proximity to the first radio node **(401),** to continue with further transmitting the non-real time measurements and/or non-real time data.

6. The first radio node **(401)** of claim 5, wherein the radio circuitry **(410)** is further configured to send, to a neighbor network node, a message indicating the ability for collecting said non-real time measurements and/or non-real time data.

7. The first radio node **(401)** of any of claims 5-6, further comprising processing circuitry **(420)** configured to determine the ability for collecting said non-real time measurements and/or non-real time data is based on any one or more of: a capability associated with collecting non-real time measurements and/or non-real time data, a current availability for collecting non-real time measurements and/or non- real time data, an availability of memory or storage space for the non-real time measurements and/or non-real time data, a radio interface load, a measurement processing load and/or a data processing load, a remaining battery energy level, a user equipment presence in an area where the first radio node is situated, an activity state of the first or the at least one second radio nodes, a radio interface capacity or processing capacity associated with collecting, a pre-defined specific node type associated with the first radio node, and types of measurements or data types which are capable of being collected by the first radio node.

8. The first radio node **(401)** of any of claims 5-7, further comprising processing circuitry **(420)** further configured to maintain an activity state of the first radio node **(401)** in a dynamic or semi-dynamic manner, wherein said activity state is indicative of an operational priority of the first radio node **(401);** and the processing circuitry **(420)** is further configured to determine the ability for collecting said non-real time measurements and/or non-real time data based on said activity state.

9. A method, in a second radio node **(505),** for handling of non-real time measurements and/or non-real time data, the second radio node **(505)** being configured for use in a wireless communications network, the method comprising:
receiving **(30),** from a first radio node **(401),** a signal or message indicating an ability of the first radio node **(401)** to collect said non-real time measurements and/or non-real time data;
transmitting **(32),** to the first radio node **(401),** non-real time measurements and/or data in response to the received signal or message;
determining **(34)** a proximity to the first radio node **(401);** and
choosing, based on the proximity, to continue or not with further transmitting the non-real time measurements and/or data.

10. The method of claim 9, wherein the ability further comprises any one or more of: a capability associated with collecting non-real time measurements and/or non-real-time data, a current availability for collecting non-real time measurements and/or non-real-time data, and an activity state associated with collecting non-real time measurements and/or non-real-time data.

11. A second radio node **(505)** for handling of non-real time measurements and/or non-real time data, the second radio node **(505)** being configured for use in a wireless communications network, the second radio node **(505)** comprising:
radio circuitry **(510)** configured to receive, from a first radio node **(401),** a signal or message indicating an ability of the first radio node **(401)** to collect said non-real time measurements and/or non-real time data;
the radio circuitry **(510)** further configured to send, to the first radio node **(401),** non-real time measurements and/or data in response to the received signal or message; and
processing circuitry **(520)** configured to determine a proximity to the first radio node **(401);**
wherein the radio circuitry **(510)** is configured to choose, based on the proximity, to continue or not with further sending the non-real time measurements and/or data.

12. The second radio node **(505)** of claim 11, wherein the ability further comprises any one or more of: a capability associated with collecting non-real time measurements and/or non-real-time data, a current availability for collecting non-real time measurements and/or non-real-time data, and an activity state associated with collecting non-real time measurements and/or non-real-time data.

## Patentansprüche

1. Verfahren in einem ersten Funkknoten (401) zum Sammeln von Nicht-Echtzeit-Messungen und/oder Nicht-Echtzeit-Daten, wobei der erste Funkknoten (401) für den Gebrauch in einem drahtlosen Kommunikationsnetzwerk konfiguriert ist, wobei das Verfahren Folgendes umfasst:
Übertragen (14) eines Signals oder einer Nachricht an zumindest einen zweiten Funkknoten (505), das/die eine Bereitschaft zum Sammeln der Nicht-Echtzeit-Messungen und/oder Nicht-Echtzeit-Daten anzeigt;
Empfangen (16) der Nicht-Echtzeit-Messungen und/oder Nicht-Echtzeit-Daten von dem zumindest einen zweiten Funkknoten (505) als Reaktion auf das Signal oder die Nachricht, das/die die Bereitschaft anzeigt; und
Empfangen weiterer Nicht-Echtzeit-Messungen und/oder Nicht-Echtzeit-Daten von dem zumindest einen zweiten Funkknoten (505), wenn der zumindest eine zweite Funkknoten (505) basierend auf einer Nähe zum ersten Funkknoten (401) gewählt hat, mit weiterem Übertragen der Nicht-Echtzeit-Messungen und/oder Nicht-Echtzeit-Daten fortzufahren.

2. Verfahren nach Anspruch 1, ferner umfassend das Senden (15) einer Nachricht an einen benachbarten Netzwerkknoten, die die Bereitschaft zum Sammeln der Nicht-Echtzeit-Messungen und/oder Nicht-Echtzeit-Daten anzeigt.

3. Verfahren nach einem der Ansprüche 1-2, ferner umfassend das Bestimmen (12), dass die Bereitschaft zum Sammeln der Nicht-Echtzeit-Messungen und/oder Nicht-Echtzeit-Daten auf einem oder mehreren von Folgendem basiert: einer mit dem Sammeln von Nicht-Echtzeit-Messungen und/oder Nicht-Echtzeit-Daten assoziierten Fähigkeit, einer aktuellen Verfügbarkeit zum Sammeln von Nicht-Echtzeit-Messungen und/oder Nicht-Echtzeit-Daten, einer Verfügbarkeit von Arbeits- oder Datenspeicher für die Nicht-Echtzeit-Messungen und/oder Nicht-Echtzeit-Daten, einer Funkschnittstellenlast, einer Messungsverarbeitungslast und/oder einer Datenverarbeitungslast, einem verbleibenden Batterieladungspegel, einem Vorhandensein eines Benutzergeräts in einem Bereich, wo sich der erste Funkknotenbefindet, einem Aktivitätszustand des ersten oder des zumindest einen zweiten Funkknotens, einer mit dem Sammeln assoziierten Funkschnittstellenkapazität oder Verarbeitungskapazität, einem im Voraus definierten mit dem ersten Funkknoten assoziierten spezifischen Knotentyp, und Typen von Messungen oder Datentypen, die geeignet sind, vom ersten Funkknoten gesammelt zu werden.

4. Verfahren nach einem der Ansprüche 1-3, ferner umfassend:
Aufrechterhalten (10) eines Aktivitätszustands des ersten Funkknotens (401) in einer dynamischen oder semidynamischen Weise, wobei der Aktivitätszustand eine Betriebspriorität des ersten Funkknotens anzeigt; und
Bestimmen (11) der Bereitschaft zum Sammeln der Nicht-Echtzeit-Messungen und/oder Nicht-Echtzeit-Daten basierend auf dem Aktivitätszustand.

5. Erster Funkknoten (401) zum Sammeln von Nicht-Echtzeit-Messungen und/oder Nicht-Echtzeit-Daten, wobei der erste Funkknoten (401) für den Gebrauch in einem drahtlosen Kommunikationsnetzwerk konfiguriert ist, wobei der erste Funkknoten (401) Folgendes umfasst:
Funkschaltung (410) konfiguriert zum Senden eines Signals oder einer Nachricht an zumindest einen zweiten Funkknoten (505), das/die eine Bereitschaft zum Sammeln der Nicht-Echtzeit-Messungen und/oder Nicht-Echtzeit-Daten anzeigt;
die Funkschaltung (410) ist ferner dazu konfiguriert, die Nicht-Echtzeit-Messungen und/oder Nicht-Echtzeit-Daten von dem zumindest einen zweiten Funkknoten (505) als Reaktion auf das Signal oder die Nachricht, die die Bereitschaft anzeigt, zu empfangen; und
die Funkschaltung (410) ist ferner dazu konfiguriert, die Nicht-Echtzeit-Messungen und/oder Nicht-Echtzeit-Daten von dem zumindest einen zweiten Funkknoten (505) weiter zu empfangen, wenn der zumindest eine zweite Funkknoten (505) basierend auf einer Nähe zum ersten Funkknoten (401) gewählt hat, mit weiterem Übertragen der Nicht-Echtzeit-Messungen und/oder Nicht-Echtzeit-Daten fortzufahren.

6. Erster Funkknoten (401) nach Anspruch 5, wobei die Funkschaltung (410) ferner dazu konfiguriert ist, eine Nachricht an einen benachbarten Netzwerkknoten zu senden, die die Bereitschaft zum Sammeln der Nicht-Echtzeit-Messungen und/oder Nicht-Echtzeit-Daten anzeigt.

7. Erster Funkknoten (401) nach einem der Ansprüche 5-6, ferner umfassend eine Verarbeitungsschaltung (420), die dazu konfiguriert ist, zu bestimmen, dass die Bereitschaft zum Sammeln der Nicht-Echtzeit-Messungen und/oder Nicht-Echtzeit-Daten auf einem oder mehreren von Folgendem basiert: einer mit dem Sammeln von Nicht-Echtzeit-Messungen und/oder Nicht-Echtzeit-Daten assoziierten Fähigkeit, einer aktuellen Verfügbarkeit zum Sammeln von Nicht-Echtzeit-Messungen und/oder Nicht-Echtzeit-Daten, einer Verfügbarkeit von Arbeits- oder Datenspeicher für die Nicht-Echtzeit-Messungen und/oder Nicht-Echtzeit-Daten, einer Funkschnittstellenlast, einer Messungsverarbeitungslast und/oder einer Datenverarbeitungslast, einem verbleibenden Batterieladungspegel, einem Vorhandensein eines Benutzergeräts in einem Bereich, in dem sich der erste Funkknotenbefindet, einem Aktivitätszustand des ersten oder des zumindest einen zweiten Funkknotens, einer mit dem Sammeln assoziierten Funkschnittstellenkapazität oder Verarbeitungskapazität, einem im Voraus definierten mit dem ersten Funkknoten assoziierten spezifischen Knotentyp, und Typen von Messungen oder Datentypen, die geeignet sind, vom ersten Funkknoten gesammelt zu werden.

8. Erster Funkknoten (401) nach einem der Ansprüche 5-7, ferner umfassend eine Verarbeitungsschaltung (420), die ferner zum Aufrechterhalten eines Aktivitätszustands des ersten Funkknotens (401) in einer dynamischen oder semidynamischen Weise konfiguriert ist, wobei der Aktivitätszustand eine Betriebspriorität des ersten Funkknotens (401) anzeigt; und die Verarbeitungsschaltung (420) ist ferner dazu konfiguriert, die Bereitschaft zum Sammeln der Nicht-Echtzeit-Messungen und/oder Nicht-Echtzeit-Daten basierend auf dem Aktivitätszustand konfiguriert zu bestimmen.

9. Verfahren in einem zweiten Funkknoten (505) zum Handhaben von Nicht-Echtzeit-Messungen und/oder Nicht-Echtzeit-Daten, wobei der zweite Funkknoten (505) für den Gebrauch in einem drahtlosen Kommunikationsnetzwerk konfiguriert ist, wobei das Verfahren Folgendes umfasst:
Empfangen (30) eines Signals oder einer Nachricht von einem ersten Funkknoten (401), das/die eine Bereitschaft des ersten Funkknotens (401) zum Sammeln der Nicht-Echtzeit-Messungen und/oder Nicht-Echtzeit-Daten anzeigt;
Übertragen (32) von Nicht-Echtzeit-Messungen und/oder Nicht-Echtzeit-Daten an den ersten Funkknoten (401) als Reaktion auf das empfangene Signal oder die empfangene Nachricht;
Bestimmen (34) einer Nähe zum ersten Funkknoten (401); und
Wählen basierend auf der Nähe, mit dem weiteren Übertragen der Nicht-Echtzeit-Messungen und/oder Nicht-Echtzeit-Daten fortzufahren oder nicht.

10. Verfahren nach Anspruch 9, wobei die Bereitschaft ferner eines oder mehrere von Folgendem umfasst: einer mit dem Sammeln von Nicht-Echtzeit-Messungen und/oder Nicht-Echtzeit-Daten assoziierten Fähigkeit, einer aktuellen Verfügbarkeit zum Sammeln von Nicht-Echtzeit-Messungen und/oder Nicht-Echtzeit-Daten, und einem mit dem Sammeln von Nicht-Echtzeit-Messungen und/oder Nicht-Echtzeit-Daten assoziierten Aktivitätszustand.

11. Zweiter Funkknoten (505) zum Handhaben von Nicht-Echtzeit-Messungen und/oder Nicht-Echtzeit-Daten, wobei der zweite Funkknoten (505) für den Gebrauch in einem drahtlosen Kommunikationsnetzwerk konfiguriert ist, wobei der zweite Funkknoten (505) Folgendes umfasst:
Funkschaltung (510) konfiguriert zum Empfangen eines Signals oder einer Nachricht von einem ersten Funkknoten (401), das/die eine Bereitschaft des ersten Funkknotens (401) zum Sammeln der Nicht-Echtzeit-Messungen und/oder Nicht-Echtzeit-Daten anzeigt;
wobei die Funkschaltung (510) ferner dazu konfiguriert ist, Nicht-Echtzeit-Messungen und/oder Nicht-Echtzeit-Daten als Reaktion auf das empfangene Signal oder die empfangene Nachricht an den ersten Funkknoten (401) zu senden; und
eine Verarbeitungsschaltung (520), die dazu konfiguriert ist, eine Nähe zum ersten Funkknoten (401) zu bestimmen;
wobei die Funkschaltung (510) dazu konfiguriert ist, basierend auf der Nähe zu wählen, mit dem weiteren Senden der Nicht-Echtzeit-Messungen und/oder Nicht-Echtzeit-Daten fortzufahren oder nicht.

12. Zweiter Funkknoten (505) nach Anspruch 11, wobei die Bereitschaft ferner eines oder mehrere von Folgendem umfasst: einer mit dem Sammeln von Nicht-Echtzeit-Messungen und/oder Nicht-Echtzeit-Daten assoziierten Fähigkeit, einer aktuellen Verfügbarkeit zum Sammeln von Nicht-Echtzeit-Messungen und/oder Nicht-Echtzeit-Daten, und einem mit dem Sammeln von Nicht-Echtzeit-Messungen und/oder Nicht-Echtzeit-Daten assoziierten Aktivitätszustand.

## Revendications

1. Procédé, dans un premier noeud radio **(401),** permettant de collecter des mesures en temps non réel et/ou des données en temps non réel, le premier noeud radio **(401)** étant configuré pour être utilisé dans un réseau de communications sans fil, le procédé consistant à :
transmettre **(14),** à au moins un second noeud radio **(505),** un signal ou un message indiquant une capacité à collecter lesdites mesures en temps non réel et/ou données en temps non réel ;
recevoir **(16),** en provenance dudit au moins un second noeud radio **(505),** lesdites mesures en temps non réel et/ou données en temps non réel en réponse au signal ou message indiquant la capacité ; et
recevoir, en provenance dudit au moins un second noeud radio **(505),** d'autres mesures en temps non réel et/ou données en temps non réel, lorsque l'au moins un second noeud radio **(505)** a choisi, en se basant sur une proximité au premier noeud radio **(401),** de continuer à transmettre encore les mesures en temps non réel et/ou données en temps non réel.

2. Procédé selon la revendication 1, consistant en outre à envoyer **(15),** à un noeud de réseau voisin, un message indiquant la capacité à collecter lesdites mesures en temps non réel et/ou données en temps non réel.

3. Procédé selon l'une quelconque des revendications 1 et 2, consistant en outre à déterminer **(12)** que la capacité à collecter lesdites mesures en temps non réel et/ou données en temps non réel est basée sur l'un quelconque ou plusieurs des éléments parmi : une capacité associée à la collecte des mesures en temps non réel et/ou des données en temps non réel, une disponibilité actuelle pour la collecte des mesures en temps non réel et/ou des données en temps non réel, une disponibilité de mémoire ou d'espace de stockage pour les mesures en temps non réel et/ou données en temps non réel, une charge d'interface radio, une charge de traitement de mesures et/ou une charge de traitement de données, un niveau d'énergie restante de batterie, une présence d'équipement d'utilisateur dans une zone dans laquelle est situé le premier noeud radio, un état d'activité du premier noeud radio ou de l'au moins un second noeud radio, une capacité d'interface radio ou capacité de traitement associée à la collecte, un type de noeud spécifique prédéfini associé au premier noeud radio, et des types de mesures ou des types de données qui peuvent être collectés par le premier noeud radio.

4. Procédé selon l'une quelconque des revendications 1 à 3, consistant en outre à :
maintenir **(10)** un état d'activité du premier noeud radio **(401)** d'une manière dynamique ou semi-dynamique, dans lequel ledit état d'activité indique une priorité opérationnelle du premier noeud radio ; et
déterminer **(11)** la capacité à collecter lesdites mesures en temps non réel et/ou données en temps non réel basée sur ledit état d'activité.

5. Premier noeud radio **(401)** permettant de collecter des mesures en temps non réel et/ou des données en temps non réel, le premier noeud radio **(401)** étant configuré pour être utilisé dans un réseau de communications sans fil, le premier noeud radio **(401)** comprenant :
un ensemble de circuits radio **(410)** configuré pour envoyer, à au moins un second noeud radio **(505),** un signal ou un message indiquant une capacité à collecter lesdites mesures en temps non réel et/ou données en temps non réel ;
l'ensemble de circuits radio **(410)** étant en outre configuré pour recevoir, en provenance de l'au moins un second noeud radio **(505),** lesdites mesures en temps non réel et/ou données en temps non réel en réponse au signal ou message indiquant la capacité ; et
l'ensemble de circuits radio **(410)** étant en outre configuré pour recevoir encore, en provenance de l'au moins un second noeud radio **(505),** des mesures en temps non réel et/ou données en temps non réel, lorsque l'au moins un second noeud radio **(505)** a choisi, en se basant sur une proximité au premier noeud radio **(401),** de continuer à transmettre encore les mesures en temps non réel et/ou données en temps non réel.

6. Premier noeud radio **(401)** selon la revendication 5, dans lequel l'ensemble de circuits radio **(410)** est en outre configuré pour envoyer, à un noeud de réseau voisin, un message indiquant la capacité à collecter lesdites mesures en temps non réel et/ou données en temps non réel.

7. Premier noeud radio **(401)** selon l'une quelconque des revendications 5 et 6, comprenant en outre un ensemble de circuits de traitement **(420)** configuré pour déterminer que la capacité à collecter lesdites mesures en temps non réel et/ou données en temps non réel est basée sur l'un quelconque ou plusieurs des éléments parmi : une capacité associée à la collecte des mesures en temps non réel et/ou des données en temps non réel, une disponibilité actuelle pour la collecte des mesures en temps non réel et/ou des données en temps non réel, une disponibilité de mémoire ou d'espace de stockage pour les mesures en temps non réel et/ou données en temps non réel, une charge d'interface radio, une charge de traitement de mesures et/ou une charge de traitement de données, un niveau d'énergie restante de batterie, une présence d'équipement d'utilisateur dans une zone dans laquelle est situé le premier noeud radio, un état d'activité du premier noeud radio ou de l'au moins un second noeud radio, une capacité d'interface radio ou capacité de traitement associée à la collecte, un type de noeud spécifique prédéfini associé au premier noeud radio, et des types de mesures ou des types de données qui peuvent être collectés par le premier noeud radio.

8. Premier noeud radio **(401)** selon l'une quelconque des revendications 5 à 7, comprenant en outre un ensemble de circuits de traitement **(420)** configuré en outre pour maintenir un état d'activité du premier noeud radio **(401)** d'une manière dynamique ou semi-dynamique, dans lequel ledit état d'activité indique une priorité opérationnelle du premier noeud radio **(401)** ; et l'ensemble de circuits de traitement **(420)** est en outre configuré pour déterminer la capacité à collecter lesdites mesures en temps non réel et/ou données en temps non réel basée sur ledit état d'activité.

9. Procédé, dans un second noeud radio **(505),** permettant de traiter des mesures en temps non réel et/ou des données en temps non réel, le second noeud radio **(505)** étant configuré pour être utilisé dans un réseau de communications sans fil, le procédé consistant à :
recevoir **(30),** en provenance d'un premier noeud radio **(401),** un signal ou message indiquant une capacité du premier noeud radio **(401)** à collecter lesdites mesures en temps non réel et/ou données en temps non réel ;
transmettre **(32),** au premier noeud radio **(401),** les mesures et/ou données en temps non réel en réponse au signal ou message reçu ;
déterminer **(34)** une proximité au premier noeud radio **(401)** ; et
choisir, en se basant sur la proximité, de continuer ou non à transmettre encore les mesures et/ou données en temps non réel.

10. Procédé selon la revendication 9, dans lequel la capacité comprend en outre l'un quelconque ou plusieurs des éléments parmi : une capacité associée à la collecte des mesures en temps non réel et/ou des données en temps non réel, une disponibilité actuelle pour la collecte des mesures en temps non réel et/ou des données en temps non réel, et un état d'activité associé à la collecte des mesures en temps non réel et/ou des données en temps non réel.

11. Second noeud radio **(505)** permettant de traiter des mesures en temps non réel et/ou des données en temps non réel, le second noeud radio **(505)** étant configuré pour être utilisé dans un réseau de communications sans fil, le second noeud radio **(505)** comprenant :
un ensemble de circuits radio **(510)** configuré pour recevoir, en provenance d'un premier noeud radio **(401),** un signal ou message indiquant une capacité du premier noeud radio **(401)** à collecter lesdites mesures en temps non réel et/ou données en temps non réel ;
l'ensemble de circuits radio **(510)** étant en outre configuré pour envoyer, au premier noeud radio **(401),** les mesures et/ou données en temps non réel en réponse au signal ou message reçu ; et
un ensemble de circuits de traitement **(520)** configuré pour déterminer une proximité au premier noeud radio **(401)** ;
dans lequel l'ensemble de circuits radio **(510)** est configuré pour choisir, en se basant sur la proximité, de continuer ou non à envoyer encore les mesures et/ou données en temps non réel.

12. Second noeud radio **(505)** selon la revendication 11, dans lequel la capacité comprend en outre l'un quelconque ou plusieurs des éléments parmi : une capacité associée à la collecte des mesures en temps non réel et/ou des données en temps non réel, une disponibilité actuelle pour la collecte des mesures en temps non réel et/ou des données en temps non réel, et un état d'activité associé à la collecte des mesures en temps non réel et/ou des données en temps non réel.
